# EUROPÄISCHE PATENTSCHRIFT

(11) **EP 2 513 456 B1**
(45) Veröffentlichungstag und Bekanntmachung des Hinweises auf die Patenterteilung: **25.02.2015**
(21) Anmeldenummer: 10805586.4
(22) Anmeldetag: 20.12.2010
(51) Int. Cl.: F02D 41/26, F02D 41/22, G06F 11/07

(54) **ÜBERWACHUNGSRECHNER IN EINEM STEUERGERÄT**
MONITORING COMPUTER IN A CONTROL DEVICE
CALCULATEUR DE SURVEILLANCE DESTINÉ À UN APPAREIL DE COMMANDE

(30) Priorität: 18.12.2009 DE 102009059087
(43) Veröffentlichungstag der Anmeldung: 24.10.2012
(73) Patentinhaber: Conti Temic Microelectronic GmbH, 90411 Nürnberg (DE)
(72) Erfinder: JACOBI, Malte, 93105 Tegernheim (DE); BÖHM, Edwin, 91056 Erlangen (DE)
(74) Vertreter: Bonn, Roman Klemens
(86) Internationale Anmeldenummer: PCT/DE2010/001492
(87) Internationale Veröffentlichungsnummer: WO 2011/072662

(56) Entgegenhaltungen:
- EP-A2- 2 090 952
- WO-A2-03/056427
- WO-A2-03/056427
- DE-A1- 4 438 714
- DE-A1- 19 609 242

## Beschreibung

Die Erfindung betrifft einen Überwachungsrechner zur Überwachung eines Prozessors, einen Prozessor und ein Verfahren zur Überwachung eines Prozessors nach den Oberbegriffen der unabhängigen Ansprüche.

Es existieren verschiedene Konzepte, ein Steuergerät mit einem Rechnerelement zum Einsatz in einem Kraftfahrzeug einzelsicherfrei bzw. eigensicher zu gestalten. Eine Möglichkeit die Eigensicherheit eines Steuergerätes zu erreichen ist die Überwachung im 3-Ebenen Konzept.

Aus der DE 44 38 714 A1 sind ein Verfahren und eine Vorrichtung zur Steuerung einer Antriebseinheit eines Fahrzeugs bekannt. Hierbei weist das Steuergerät zur Leistungssteuerung nur ein einziges Rechnerelement auf. Das Rechnerelement führt sowohl die Abschaltpfad Steuerung als auch die Überwachung durch. Betriebssicherheit und Verfügbarkeit werden dabei dadurch sicher gestellt, dass zur Durchführung der Steuerung und der Überwachung wenigstens zwei, voneinander unabhängige Ebenen in einem einzigen Rechnerelement vorgesehen sind, wobei in einer ersten Ebene die Funktionen zur Leistungssteuerung bestimmt und in einer zweiten Ebene, insbesondere in Zusammenarbeit mit einem Überwachungsmodul, diese Funktionen und somit die Funktionsfähigkeit des Rechnerelement selbst überwacht werden.

Ferner wird in der DE 44 38 714 A1 eine dritte Ebene beschrieben, die eine Ablaufkontrolle der zweiten Ebene durchführt. Diese Überwachung durch die dritte Ebene steigert die Zuverlässigkeit und Verfügbarkeit des Steuergerätes erheblich. Insbesondere wird im Überwachungsmodul die Ablaufkontrolle als Frage-Antwort-Kommunikation ausgeführt.

Das 3-Ebenen Überwachungskonzept (EGAS-Konzept) wird bevorzugt bei

Motorsteuergeräten von Fahrzeugen zur Überwachung elektronischer Motorsteuersysteme eingesetzt. Dabei besteht das Motorsteuergerät aus dem sog. Funktionsrechner und dem Überwachungsrechner. Funktionsrechner und Überwachungsrechner kommunizieren über ein Frage-Antwort-Verfahren. Darüber hinaus verfügen sie über separate Abschaltpfade.

Die Ebene 1 umfasst das eigentliche Funktionsmodul zur Funktionssteuerung der Antriebseinheit des Fahrzeugs. Sie wird daher auch als Funktionsebene bezeichnet. Sie beinhaltet Motorsteuerungsfunktionen, u.a. zur Umsetzung der angeforderten Motormomente, Komponentenüberwachungen, die Diagnose der Ein- und Ausgangsgrößen, sowie die Steuerung der Systemreaktionen im erkannten Fehlerfall. Die Ebene 1 wird auf dem Funktionsrechner ausgeführt.

Die Ebene 2, auch als Funktions-Überwachungsebene bezeichnet, umfasst das Sicherheitsmodul und wird ebenfalls auf dem Funktionsrechner ausgeführt. Sie erkennt den fehlerhaften Ablauf überwachungsrelevanter Umfänge des Funktionsmoduls der Ebene 1, u. a. durch die Überwachung der berechneten Momente oder der Fahrzeugbeschleunigung. Im Fehlerfall erfolgt die Auslösung von Systemreaktionen, wie zum Beispiel das Abschalten von sicherheitsrelevanten Endstufen.

Die Ebene 2 wird in einem durch die Ebene 3 abgesicherten Hardwarebereich des Funktionsrechners durchgeführt. Die Ebene 3, auch Rechner-Überwachungsebene genannt, umfasst das Überwachungsmodul auf einem unabhängigen Funktionsrechner mit Befehlssatztest, Programmablaufkontrolle, A/D Wandler-Test sowie zyklische und vollständige Speichertests der Ebene 2. Das Überwachungsmodul wird auf einem Funktionsrechner ausgeführt. Der vom Funktionsrechner unabhängige Überwachungsrechner testet durch ein Frage-Antwort-Verfahren die ordnungsgemäße Abarbeitung der Programmbefehle des Funktionsrechners. Im Fehlerfall erfolgt die Auslösung von Systemreaktionen unabhängig vom Funktionsrechner.

Bei aktuellen elektronischen Motorsteuerungssystemen ist die gesamte Funktions- und Überwachungssoftware in einem Steuergerät integriert. Das Überwachungskonzept kann auch in anderen Fahrzeugsteuergeräten, insbesondere Getriebesteuergeräten realisiert werden

Aus dem Stand der Technik sind Überwachungskonzepte bekannt, bei denen ein Überwachungsrechner mittels einer einzigen Überwachungseinheit (Monitoring Unit) im Funktionsrechner mehr als eine Programmablaufkontrolle durchführt, siehe hierzen WO 03/056427 A2 und DE 196 09 242 A. Dabei muss diese eine Überwachungseinheit sowohl die Einzelantworten aus den einzelnen Programmablaufkontrollen synchronisieren als auch die einzelnen Antworten zu einer Gesamtantwort zusammenfügen. Dabei können Fehler sowohl bei der Synchronisierung als auch beim Zusammenfügen der Antworten auftreten.

Es stellt sich daher die Aufgabe, die bekannten Überwachungsrechner zur Überwaschung eines Prozessors in einem Kraftfahrzeugsteuergerät zu verbessern.

Erfindungsgemäß wird die Aufgabe gelöst durch einen Überwachungsrechner mit den Merkmalen des unabhängigen Anspruchs 1.

Der Prozessor umfasst im wesentlichen einen Überwachungsrechner und einen Funktionsrechner. Auf dem Prozessor wird ein Rechenelement ausgeführt. Das Rechenelement umfasst im Besonderen drei Software-Programmmodule: ein Funktionsmodul zur Funktionssteuerung des Kraftfahrzeugs, ein Sicherheitsmodul zur Überprüfung des Funktionsmoduls und ein Überwachungsmodul wenigstens zur Überprüfung des Sicherheitsmoduls. Der Überwachungsrechner kommuniziert mit dem Überwachungsmodul auf dem Funktionsrechner mittels eines Frage-Antwort-Verfahrens über eine Schnittstelle.

Insbesondere sind der Überwachungsrechner und der Funktionsrechner als physikalisch voneinander unabhängige Hardware-Bausteine ausgeführt. Vorteilhafterweise umfasst der Überwachungsrechner zwei funktional voneinander unabhängige Monitoring Units, wobei durch jede, als Hardware ausgeführte Monitoring Unit im Funktionsrechner mittels eines entsprechenden, als Software ausgeführten Monitoring Elements jeweils eine Kontrolle zur Überwachung der ordnungsgemäßen Abarbeitung insbesondere der Programmbefehle des Funktionsrechners ausführbar ist. Dadurch wird vor allem eine Beschleunigung der Programmablaufkontrolle und eine Erhöhung der Sicherheit in der Kontrolle erreicht.

Die erste Monitoring Unit führt mittels des ersten Monitoring Elements als erste Kontrolle im Sicherheitsmodul insbesondere einen Speichertest und eine Programmablaufkontrolle durch. Weiterhin führt die zweite Monitoring Unit mittels des zweiten Monitoring Elements als zweite Kontrolle im Überwachungsmodul insbesondere einen Befehlssatztest und einen AD-Wandler-Test durch. Vorteilhafterweise werden die jeweiligen Kontrollen in sogenannten Testpfaden durchgeführt.

Besonders hervorzuheben ist, dass beim Auftreten eines Fehlers in einer der beiden Kontrollen jeweils ein Fehlerzähler bedienbar ist und bei Überschreiten von frei programmierbaren Fehlerreaktionsschwellen unabhängig vom Funktionsmodul eine Systemreaktion durch das Überwachungsmodul auslösbar ist. Eine derartige Systemreaktion kann sein, das Fahrzeug in einen eingeschränkten Notlaufinodus zu bringen, der es zum Beispiel erlaubt, gerade noch auf dem Standstreifen einer Fahrbahn auszurollen.

Dabei kann die Fehlerzählung zur Erhöhung der Sicherheit beispielsweise asymmetrisch sein, das heißt, dass eine falsche Antwort im Frage-Antwort-Verfahren zweifach nach oben, eine richtige Antwort dagegen nur einfach nach unten gezählt wird.

Insbesondere mit dem Einschalten des Steuergerätes wird im Rechenelement jeweils eine sogenannte State Machine zum Konfigurieren der zugehörigen Monitor Unit durchlaufen. Eine State Machine ist ein Verhaltensmodell, bestehend aus Zuständen, den sog. States, Zustandsübergängen und Aktionen. Ein Zustand speichert die Information über die Vergangenheit. Er spiegelt die Änderungen der Eingabe seit dem Systemstart bis zum aktuellen Zeitpunkt wieder. Ein Zustandsübergang zeigt eine Änderung des Zustandes der State Machine und wird durch logische Bedingungen beschrieben, die erfüllt sein müssen, um den Übergang zu ermöglichen. Eine Aktion ist die Ausgabe der State Machine, die in einer gewissen Situation erfolgt.

Vorzugsweise wird beim Initialisieren des Steuergerätes im Rechenelement die entsprechende Monitoring Unit konfiguriert. Bei diesem Vorgang werden jeweils mittels der zugehörigen State Machine, neben anderen Parametern, beispielsweise eine Antwortzeit und ein Antwortzeitfenster des Frage-Antwort-Verfahrens sowie eine Abschaltschwelle und eine Reset-Schwelle festgelegt. Dabei können die Parameter je Monitoring Unit durchaus voneinander abweichen. Es ist aber auch denkbar, dass beide Monitoring Units gleich konfiguriert werden.

Wenn beide State Machines erfolgreich durchlaufen worden sind, nehmen die beiden Monitoring Units vorteilhafterweise mittels des jeweiligen Monitoring Elements die Überwachung des Rechenelements auf.

Die Ausgänge des Überwachungsrechners sind insbesondere komplementär ausgeführt. Das heißt, wenn ein Ausgang high ist, ist der andere low. Bei Zerstörung des Chips werden mit hoher Wahrscheinlichkeit beide Ausgänge entweder high oder low sein. Dadurch sind die sicherheitskritischen Endstufen über den Abschaltpfad im Aus-Zustand.

Die Antwortzeit, die beim Durchlaufen der State Machine festgelegt wird, ist im wesentlichen frei konfigurierbar und liegt üblicherweise im Bereich zwischen 1 ms und 255 ms. Typische Fehlerreaktionszeiten liegen bei ca. 60ms. Diese Zeit kann aber variieren abhängig von Getriebeauslegung, Kundenanforderungen, etc. Als Kompromiss zwischen größtmöglicher Koüfigurierbarkeit und Implementierungsaufwand wurde dieser Bereich gewählt.

Das Antwortzeitfenster wird ebenfalls in der State Machine festgelegt und liegt primär im Bereich zwischen 1 ms und 255 ms.

Die Antwortzeit ist der spätest mögliche Zeitpunkt zum Senden der Antwort. Als zweites wird ein sogenanntes "closed window" konfiguriert. In diesem Bereich darf keine Antwort gesendet werden. Die Differenz aus Antwortzeit und "closed window" ergibt das "open window" bzw. Antwortzeitfenster. Das Verhältnis zwischen Antwortzeit und Antwortzeitfenster ist insbesondere frei skalierbar. Bei einem möglichen Funktions-Software-Fehler (z.B. verfälschtes Timing) könnte es passieren, dass die richtigen Antworten zu schnell gesendet werden. Durch das "closed window" werden diese zu frühen Antworten nicht gewertet, was zu einer Erhöhung des Fehlerzählers führt.

In der State Machine ist ein Abschaltpfadtest vorteilhafterweise als eigener Zustand ausgeführt. Dadurch können die Antworten aus dem Frage-Antwort-Verfahren zwischen dem Überwachungsrechner und dem Funktionsrechner möglichst schnell ohne Rücksicht auf das Antwortzeitfenster geschickt werden. Damit kann die System-Hochlaufzeit kurz gehalten werden. Ein Abschaltpfadtest kann prüfen, ob der Funktionsrechner oder der Überwachungsrechner zum Beispiel die sicherheitsrelevanten Endstufen korrekt abschalten kann, wenn ein Fehler auftritt.

Dadurch, dass auf dem Überwachungsrechner im Hintergrund ein kontinuierlicher Checksum-Test (CRC-Test) durchführbar ist, werden hauptsächlich eventuelle "Bit-Kipper", verursacht z.B. durch EMV-Störungen, in den Konfigurationsdaten erkannt. Diese Fehler führen dann in der Regel zum Auslösen des Abschaltpfads.

Insbesondere, um keine Vorhersage der nächsten Frage zu ermöglichen, erfolgt die Zufallszahlengenerierung im Zusammenhang mit der Auswahl der Fragen im Frage-Antwort-Verfahren mittels eines Linear Feedback Shift Registers. Je ein Linear Feedback Shift Register befindet sich in der Monitoring Unit MU1 und MU2.

Eine weitere Aufgabe der Erfindung ist es, einen gegenüber dem genannten Stand der Technik verbesserten Prozessor mit einem vorbeschriebenen Überwachungsrechner in einem Steuergerät eines Kraftfahrzeugs anzugeben.

Diese Aufgabe ist erfindungsgemäß gelöst durch einen Prozessor mit den Merkmalen des unabhängigen Anspruchs 14.

Wie weiter oben ausführlich ausgeführt, umfasst das Rechenelement, das auf dem Prozessor des Steuergerätes ausgeführt wird, im wesentlichen die drei Programmmodule: Funktionsmodul, Sicherheitsmodul und Überwachungsmodul. Der Prozessor ist insbesondere unterteilt in einen Funktionsrechner und einen Überwachungsrechner, wobei das Funktionsmodul, das Sicherheitsmodul und das Überwachungsmodul auf dem Funktionsrechner ausgeführt werden. Der Überwachungsrechner kommuniziert mit dem Funktionsrechner üblicherweise mittels eines Frage-Antwort-Verfahrens über eine Schnittstelle.

Der Kern der Erfindung ist, dass der Funktionsrechner und der Überwachungsrechner insbesondere physikalisch unabhängig voneinander sind und der Überwachungsrechner zudem zwei funktional voneinander unabhängige Monitoring Units umfasst. Zur Überwachung der ordnungsgemäßen Abarbeitung der Programmbefehle des Funktionsrechners ist im Funktionsrechner vorteilhafterweise durch jede Monitoring Unit mittels eines entsprechenden Monitoring Elements jeweils eine Kontrolle ausführbar. Dadurch kann das Kontrollverfahren vorteilhafterweise beschleunigt und zudem auch sicherer gestaltet werden.

In der nachfolgenden Beschreibung werden die Merkmale und Einzelheiten der Erfindung in Zusammenhang mit den beigefügten Zeichnungen anhand von Ausführungsbeispielen näher erläutert. Dabei sind in einzelnen Varianten beschriebene Merkmale und Zusammenhänge grundsätzlich auf alle Ausführungsbeispiele übertragbar. In den Zeichnungen zeigen:
- Fig. 1: ein 3-Ebenen Konzept, unterteilt in Module (Software) und Rechner (Hardware), und
- Fig. 2: eine State Machine mit Zuständen, Übergängen und Bedingungen.

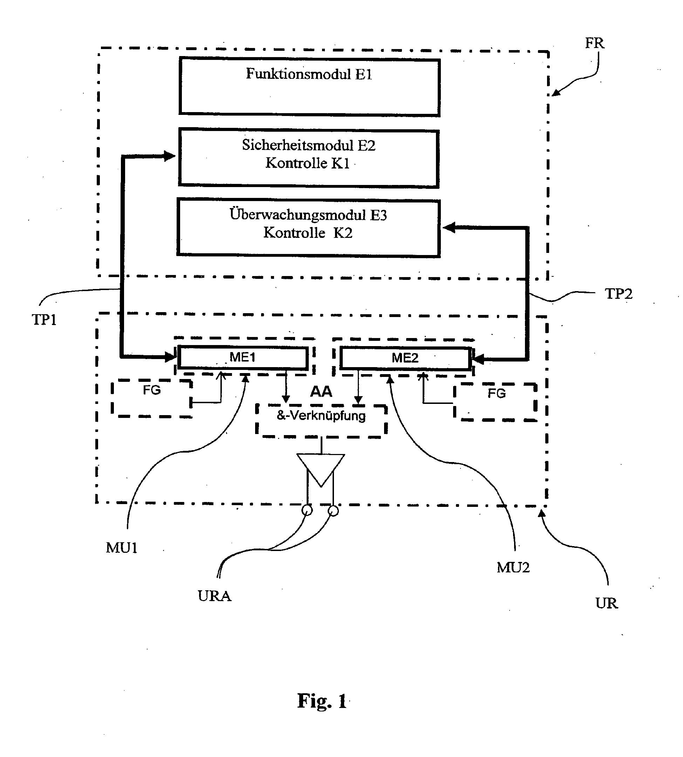

Die Kästchen in Fig. 1 mit strichpunktierten bzw. gestrichelten Umrandungen zeigen je eine Hardware-Komponente, die Kästchen mit durchgezogenen Umrandungen zeigen je eine Software-Komponente. Die geradlinigen Pfeile zwischen den Kästchen zeigen je einen Datenaustausch.

Fig. 1 zeigt ein im wesentlichen aus dem EGAS-Konzept bekanntes 3-Ebenen-Überwachungsmodell, wie es beispielsweise in einem Motorsteuergerät oder einem Getriebesteuergerät in Kraftfahrzeugen eingesetzt wird.

Das erste strichpunktierte Kästchen kennzeichnet den Funktionsrechner (FR) des Prozessors. Das zweite strichpunktierte Kästchen kennzeichnet den Überwachungsrechner (UR) des Prozessors. Funktionsrechner (FR) und Überwachungsrechner (UR) sind physikalisch voneinander getrennt auf dem Prozessor angeordnet. Der Überwachungsrechner (UR) kann beispielsweise als ASIC ausgeführt sein. Die drei Programmmodule Funktionsmodul (E1), Sicherheitsmodul (E2) und Überwachurigsmodul (E3) werden auf dem Funktionsrechner (FR) ausgeführt.

Das Funktionsmodul (E1) stellt die Ebene 1 des EGAS-Konzepts dar, die auch als Funktionsebene bezeichnet wird. Sie dient insbesondere zur Funktionssteuerung der Antriebseinheit des Fahrzeugs, und beinhaltet, wie oben erläutert, zum Beispiel Motorsteuerungsfunktionen, u.a. zur Umsetzung der angeforderten Motormomente, Komponentenüberwachungen, die Diagnose der Ein- und Ausgangsgrößen, sowie die Steuerung der Systemieaktionen im erkannten Fehlerfall.

Das Sicherheitsmodul (E2) stellt die Ebene 2 des EGAS-Konzepts dar, die auch als Funktions-Überwachungsebene bezeichnet wird. Sie erkennt den fehlerhaften Ablauf überwachungsrelevanter Umfänge des Funktionsmoduls (E1) der Ebene 1. So werden insbesondere die berechneten Momente oder zum Beispiel die Fahrzeugbeschleunigung überwacht. Tritt ein Fehler auf, erfolgt insbesondere die Auslösung von Systemreaktionen. Das Sicherheitsmodul (E2) wird primär in einem durch das Überwachungsmodul (E3) abgesicherten Hardwarebereich des Funktionsrechners (FR) durchgeführt.

Das Überwachungsmodul (E3) stellt die Ebene 3 des EGAS-Konzepts dar, die auch als Rechner-Überwachungsebene bezeichnet wird. Das Überwachungsmodul (E3) wird insbesondere auf dem vom Überwachungsrechner (UR) unabhängigen Funktionsrechner (FR) ausgeführt. Der Überwachungsrechner (UR) testet zum Beispiel durch wenigstens ein Frage-Antwort-Verfahren die ordnungsgemäße Abarbeitung der Programmbefehle des Funktionsrechners (FR). Tritt ein Fehler auf, erfolgt im Besonderen eine Auslösung von Systemreaktionen unabhängig vom Funktionsrechner (FR).

Der Überwachungsrechner (UR) umfasst im wesentlichen zwei voneinander unabhängige Monitoring Units (MU1, MU2). Auf jeder Monitoring Unit (MU1, MU2) wird ein entsprechendes Monitoring Element (ME1, ME2) zur Kontrolle (K1, K2) des Sicherheitsmoduls (E2) bzw. des Überwachungsmoduls (E3) ausgeführt.

So führt zum Beispiel die erste Monitoring Unit (MU1) mittels des ersten Monitoring Elements (ME1) als erste Kontrolle (K1) über den ersten Testpfad (TP1) im Sicherheitsmodul (E2) einen Speichertest und eine Programmablaufkontrolle durch.

Parallel dazu und unabhängig von der Kontrolle K1 führt die zweite Monitoring Unit (MU2) mittels des zweiten Monitoring Elements (ME2) als zweite Kontrolle (K2) über den zweiten Testpfad (TP2) im Überwachungsmodul (E3) vorzugsweise einen Befehlssatztest und einen AD-Wandler-Test durch. Die zweite Kontrolle (K2) könnte auch auf der ersten Monitoring Unit (MU1) mittels des ersten Monitoring Elements (ME1) über den ersten Testpfad (TP1) ausgeführt werden, und umgekehrt.

Insbesondere erfolgt die besagte Progammablaufkontrolle als Frage-Antwort-Verfahren zwischen einer Monitoring Unit (MU1, MU2) und dem Funktionsrechner (FR). Die entsprechenden Fragen werden zum Beispiel in einem Monitoring Element (ME1, ME2) zugeordneten Fragengenerator (FG) erzeugt Die Fragengeneratoren (FG) sind gleich ausgeführt, aber die Auswahl einer Frage erfolgt per Zufall. Daher sind die Fragen von Monitoring Unit (MU1) und Monitoring Unit (MU2) praktisch immer unterschiedlich.

Tritt in der Kontrolle (K1, K2) ein Fehler auf, so wird vorteilhafterweise jeweils ein Fehlerzähler hoch gesetzt. Bei Überschreiten einer entsprechenden frei programmierbaren Fehlerreaktionsschwelle wird im Besonderen durch das Überwachungsmodul (E3) eine Systemreaktion unabhängig vom Funktionsmodul (E1) ausgelöst. Die frei programmierbaren Fehlerreaktionsschwellen können für verschiedene Systemreaktionen, wie zum Beispiel dem Abschalten der sicherheitsrelevanten Endstufen oder dem Reset des Funktionsrechners (FR) unterschiedlich sein. Wenn eine der Monitoring Units (MU1, MU2) einen Reset generiert, wird das komplette System incl. State Machine (SM1, SM2) und Funktionsrechner (FR) zurückgesetzt. Die Konfiguration könnte aber beispielsweise so sein, dass nur bei Fehlern der Monitoring Unit (MU1) ein Reset ausgelöst wird, und bei Fehlern der Monitoring Unit (MU2) lediglich die sicherheitsrelevante Endstufe abgeschaltet wird.

Ferner kann die Erzeugung eines Reset-Befehls als Fehlerreaktion wahlweise freigegeben oder gesperrt werden.

Die Ausgänge (URA) des Überwachungsrechners (UR) sind vorteilhafterweise komplementär ausgeführt. Bei einem Totalausfall des beispielsweise als ASIC ausgeführten Überwachungsrechners (UR) zum Beispiel durch einen Chip-Bruch oder einen sogenannten Latch-up, d. h. einem Übergang eines Halbleiterbauelements in einen niederohmigen Zustand, geht man davon aus, dass alle Ausgänge des Überwachungsrechners (UR) entweder gleichzeitig auf einem high- oder einem low-Pegel liegen. Die komplementären Ausgänge zusammen mit einer nicht gezeigten externen Beschaltung sorgen in diesem Fall dafür, dass der Sicherheitspfad des Systems und damit die sicherheitsrelevanten Endstufen des Systems abgeschaltet werden. Die externe Beschaltung besteht z. B. aus Widerständen und Transistoren und sorgt dafür, dass nur genau eine Kombination der komplementären Ausgänge die sicherheitsrelevanten Endstufen freigibt.

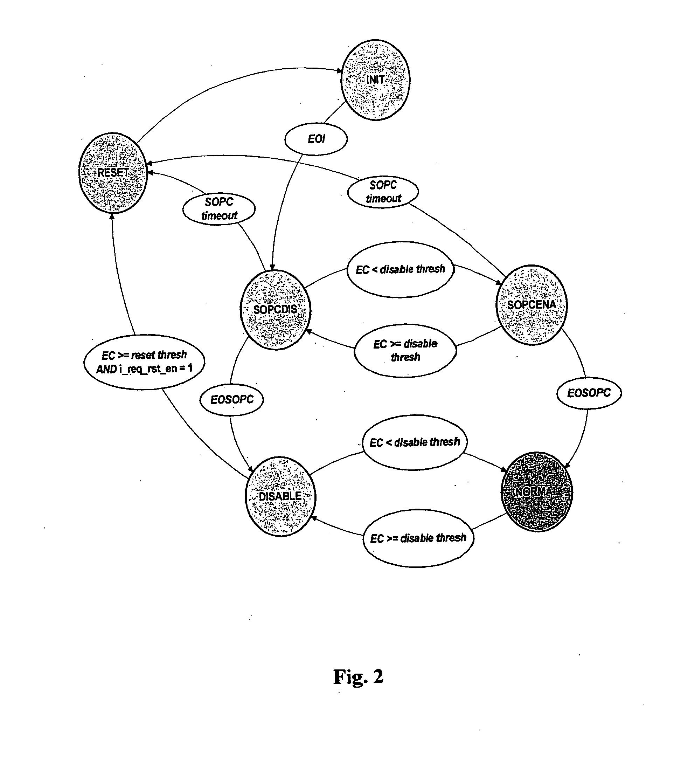

Fig. 2 zeigt eine State Machine. Die State Machine ist vorteilhafterweise mit geringem Hardware-Aufwand realisierbar. Dabei ist diese Ausführungsform der State Machine schneller, sicherer und weniger störanfällig als eine als Software ausgeführte State Machine . Zudem ist sie nicht manipulierbar. Wie in der Beschreibungseinleitung bereits dargelegt, ist eine State Machine ein Verhaltensmodell, bestehend aus Zuständen, den sog. States, Zustandsübergängen und Aktionen. Ein Zustand speichert die Information über die Vergangenheit. Er gibt die Änderungen der Eingabe seit dem Systemstart bis zum aktuellen Zeitpunkt wieder. Ein Zustandsübergang zeigt eine Änderung des Zustandes der State Machine und wird durch logische Bedingungen beschrieben, die erfüllt sein müssen, um den Übergang zu ermöglichen. Eine Aktion ist die Ausgabe der State Machine, die in einer bestimmten Situation erfolgt. Die State Machines werden in digitalen Schaltungen hauptsächlich durch speicherprogrammierbare Steuerungen, logische Gatter, Flip-Flops oder Relais realisiert. Zur Implementierung der Hardware verwendet man in der Regel ein Register zum Speichern der Zustandsvariablen, eine Logikeinheit, die die Zustandsübergänge auswählt, und eine weitere Logikeinheit, die für die Ausgabe zuständig ist. Jedem Monitoring Element (ME1, ME2) ist eigens eine State Machine (SM1, SM2) zugeordnet.

Beim Initialisieren oder nach einem Reset des Steuergeräts wird der (INIT) State eingenommen. Im (INIT) State wird die Monitoring Unit (MU1, MU2) durch das Funktionsmodul (E1) über ein Kommunikationsinterface zwischen Überwachungsrechner (UR) und Funktionsrechner (FR) konfiguriert. Dabei werden insbesondere die Antwortzeit, das Antwortzeitfenster, die Fehlerreaktionsschwelle, speziell die Abschaltschwelle (thresh) und die Reset-Schwelle (reset thresh) festgelegt.

Die Antwortzeit, die beim Durchlaufen der State Machine (SM1, SM2) festgelegt wird, ist im wesentlichen frei konfigurierbar und liegt üblicherweise im Bereich zwischen 1 ms und 255 ms.

Insbesondere wird auch das Antwortzeitfenster in der State Machine festgelegt und liegt primär im Bereich zwischen 1 ms und 255 ms. Das Verhältnis zwischen Antwortzeit und Antwortzeitfenster ist insbesondere frei skalierbar.

Ferner wird der Anfangswert des Fehlerzählers automatisch oberhalb der Abschaltschwelle (thresh) gesetzt, um sicherzustellen, dass der Fehlerzähler im (INIT) State abgeschaltet bleibt. Durch die Aktion (EOI) (= End Of INIT State) ist die Konfiguration des Monitoring Element (ME1, ME2) abgeschlossen und auch nicht mehr änderbar. Damit ist der Zustandsübergang in den State (SOPCDIS) (= Switch Off Path Check Disable) vollzogen, wobei (SOPC) der Abschaltpfadtest ist, wobei ein Abschaltpfadtest sicherstellen kann, dass der Funktionsrechner oder der Überwachungsrechner zum Beispiel die sicherheitsrelevanten Leistungsendstufen korrekt abschalten kann, wenn ein Fehler auftritt. In diesem State sind die Leistungsendstufen noch nicht freigeschaltet.

Beim Abschaltpfadtest werden in der State Machine die Zustände (SOPCDIS) und (SOPCENA) eingenommen. Beim ersten sind die Endstufen abgeschaltet, beim zweiten freigegeben. Vorteil dieser Lösung ist, dass während des Abschaltpfadtests die Antworten schnellstmöglich ohne Rücksicht auf das Antwortzeitfenster geschickt werden können. Damit kann die System-Hochlaufzeit kurz gehalten werden.

Mit dem Erreichen des State (SOPCDIS) wird unter anderem der SOPC timer gestartet, der die Zeit misst bis zum Befehl (EOSOPC) (=End of SOPC). Wenn der Test zu lange dauert, wird er abgebrochen und der State (SOPCDIS) wird über die Aktion (SOPC timeout) überführt in den State (RESET).

Im State (SOPCDIS) startet das Frage-Antwort- Spiel zwischen Überwachungsrechner (UR) und Fünktionsrechner (FR) vorzugsweise ohne zeitliche Beschränkung, um einen möglichst schnellen Ablauf des Tests zu gewährleisten. Das heißt, das Antwortzeitfenster ist offen. Bei einer falschen Antwort wird der Fehlerzähler erhöht. Wenn der Fehlerzähler unterhalb einer Abschalt-Schwelle (thresh) liegt, erfolgt insbesondere unverzüglich der Übergang in den State (SOPCENA) (= Switch Off Path Check Enable) durch die Bedingung (EC<disable thresh). Die Leistungsendstufen werden damit freigeschaltet.

Der Übergang vom State (SOPCDIS) in den State (DISABLE) erfolgt über die Bedingung (EOSOPC) (= End Of Switch Off Path Check), die durch das Kommunikationsinterface zwischen Funktionsrechner (FR) und Überwachungsrechner (UR) angestoßen wird. Die Leistungsendstufen bleiben, wie im State (SOPCDIS) definiert, gesperrt bzw. abgeschaltet. Einzige Bedingung ist das richtige Kommando vor Ablauf der Bedingung (SOPC timeout).

Bei Erreichen des State (SOPCENA), insbesondere ausgehend vom State (SOPCDIS), läuft der SOPC timer vorteilhafterweise weiter. Das Frage-Antwort-Spiel zwischen Überwachungsrechner (UR) und Funktionsrechner (FR) läuft ebenfalls ohne zeitliche Beschränkung weiter. Wenn der Fehlerzähler eine Abschalt -Schwelle (thresh) erreicht bzw. überschritten hat, erfolgt insbesondere ein Übergang zurück in den State (SOPCDIS) durch die Bedingung (EC>=disable thresh).

Wenn der Abschaltpfadtest zu lange dauert, wird er abgebrochen und der State (SOPCENA) wird über die Bedingung (SOPC timeout) in den State (RESET) überführt. Der anschließende Übergang vom State (RESET) in den State (INIT) erfolgt automatisch.

Der Übergang vom State (SOPCENA) in den State (NORMAL) erfolgt vorwiegend über die Bedingung (EOSOPC), die wieder durch das Kommunikationsinterface angestoßen wird.

Im State (NORMAL) werden die Leistungsendstufen freigeschaltet, sofern sie nicht schon in einem vorherigen State freigeschaltet worden sind. In diesem State wird das Frage-Antwort-Spiel zwischen Überwachungsrechner (UR) und Funktionsrechner (FR) fortgesetzt, wobei insbesondere der Zählerstand des Fehlerzählers aus dem vorherigen State übernommen wird. Im Gegensatz zu den States (SOPCENA) und (SOPCDIS) des Abschaltpfadtests gibt es hier vorzugsweise eine zeitliche Beschränkung bezüglich Antwortzeit und Antwortzeitfenster. Antwort darf nicht zu früh und nicht zu spät kommen, um eine Laufzeitüberwachung des Betriebssystem des Funktionsrechners sicherzustellen. Die Antwortzeit ist der spätest mögliche Zeitpunkt zum Senden der Antwort. Als zweites wird ein sogenanntes "closed window" konfiguriert. In diesem Bereich darf keine Antwort gesendet werden. Die Differenz aus Antwortzeit und "closed window" ergibt das "open window" bzw. Antwortzeitfenster.

Antwortzeit und Antwortzeitfenster sind zuvor im State (INIT) programmiert worden. Der Fehlerzähler wird vorteilhafterweise erhöht sowohl bei einer falschen Antwort als auch beim Überschreiten der Antwortzeit oder des Antwortzeitfensters. Beim Erreichen beziehungsweise Überschreiten einer Abschalt-Schwelle (thresh)erfolgt der Übergang in den State (DISABLE) durch die Bedingung (EC>=disable thresh).

Im State (DISABLE) werden die Leistungsendstufen ausgeschaltet. In diesem State wird das Frage-Antwort-Spiel zwischen Überwachungsrechner (UR) und Funktionsrechner (FR) mit unverändertem Fehlerzählerstand fortgesetzt. Auch hier gibt es eine zeitliche Beschränkung bezüglich Antwortzeit und Antwortzeitfenster. Der Fehlerzähler wird ebenfalls sowohl bei einer falschen Antwort als auch beim Überschreiten der Antwortzeit bzw. des Antwortzeitfensters erhöht. Beim Unterschreiten der Schwelle (thresh) erfolgt durch die Bedingung (EC<disable thresh) der Übergang zurück in den State (NORMAL). Im state (NORMAL) sind die Endstufen wieder freigegeben.

Sobald im State (DISABLE) der Fehlerzähler eine Reset- Schwelle (reset thresh) erreicht hat und das Register für die Reset-Freigabe den voreingestellten Wert 1 hat, erfolgt durch die Bedingung (EC>=reset thresh AND i_req_rst_en=1) der Übergang in den State (RESET). Der anschließende Übergang vom State (RESET) in denen State (INIT) erfolgt wieder automatisch.

Um den gesamten Ablauf in der State Machine noch schneller zu gestalten, kann in der State Machine der States (SOPCENA) ausgelassen werden. Ein schneller Abschaltpfadtest findet dann nicht statt.

Wenn beide State Machines erfolgreich durchlaufen worden sind, nehmen die beiden Monitoring Units im NORMAL State vorteilhafterweise mittels des jeweiligen Monitoring Elements die Überwachung des Rechenelements auf.

Zusammenfassend kann gefolgert werden, dass das erfindungsgemäße Überwachungskonzept zur Überwachung eines Rechenelements in einem Steuergerät eines Kraftfahrzeugs, gegenüber den bekannten Überwachungskonzepten sowohl bzgl. Schnelligkeit, Programmieraufwand und Sicherheit eine Verbesserung darstellt.

## Patentansprüche

1. Überwachungsrechner (UR) zur Überwachung eines Prozessors, auf dem ein Rechenelement ausgeführt wird, wobei der Prozessor neben dem Überwachungsrechner (UR) im wesentlichen einen Funktionsrechner (FR) umfasst,
und wobei das Rechenelement ein Funktionsmodul (E1), ein Sicherheitsmodul (E2) und ein Überwachungsmodul (E3) umfasst, alle Module (E1, E2 und E3) auf dem Funktionsrechner (FR) ausgeführt werden, und der Überwachungsrechner (UR) mit zumindest dem Überwachungsmodul (E3) auf dem Funktionsrechner (FR) mittels eines Frage-Antwort-Verfahrens über eine Schnittstelle kommuniziert,
**dadurch gekennzeichnet, dass**
der Funktionsrechner (FR) und der Überwachungsrechner (UR) physikalisch unabhängig voneinander sind und der Überwachungsrechner (UR) zwei voneinander unabhängige Monitoring Units (MU1, MU2) umfasst, wobei durch jede Monitoring Unit (MU1, MU2) im Funktionsrechner (FR) mittels eines entsprechenden Monitioring Elements (ME1, ME2) jeweils eine Kontrolle (K1, K2) zur Überwachung der ordnungsgemäßen Abarbeitung der Programmbefehle des Funktionsrechners (FR) ausgeführt wird.

2. Überwachungsrechner (UR) nach Anspruch1, **dadurch gekennzeichnet, dass** mittels der ersten Monitoring Unit (MU1) eine erste Kontrolle (K1) im Sicherheitsmodul (E2) und mittels der zweiten Monitoring Unit (MU2) eine zweite Kontrolle (K2) im Überwachungsmodul (E3) jeweils in Testpfaden (TP1, TP2) durchgefürht wird.

3. Überwachungsrechner (UR) nach Anspruch 1 oder 2, **dadurch gekennzeichnet, dass** mittels der ersten Monitoring Unit (MU1) als erste Kontrolle (K1) im Sicherheitsmodul (E2) einen Speichertest und eine Programmablaufkontrolle durchgeführt wird.

4. Überwachungsrechner (UR) nach Anspruch 1 oder 2, **dadurch gekennzeichnet, dass** mittels der zweiten Monitoring Unit (MU2) als zweite Kontrolle (K2) im Überwachungsmodul (E3) einen Befehlssatztest und ein AD-Wandler-Test durchgeführt wird.

5. Überwachungsrechner (UR) nach einem der vorhergehenden Ansprüche, **dadurch gekennzeichnet, dass** beim Auftreten eines Fehlers in der Kontrolle (K1, K2) ein Fehlerzähler bedient wird und bei Überschreiten von frei programmierbaren Fehlerreaktionsschwellen (thresh, reset thresh) durch den Überwachungsrechner (UR) eine Systemreaktion unabhängig vom Funktionsrechner (FR) ausgeläst wird.

6. Überwachungsrechner (UR) nach einem der vorhergehenden Ansprüche, **dadurch gekennzeichnet, dass** jeweils mittels einer State Machine (SM1, SM2) beim Initialisieren des Prozessors im Rechenelement beim Konfigurieren der entsprechenden Monitoring Unit (MU1, MU2) neben anderen Parametern eine Antwortzeit, ein Antwortzeitfenster, eine Abschaltschwelle (thresh) und eine Reset-Schwelle (reset thresh) festgelegt werden, wobei die Parameter Monitoring Unit (MU1, MU2) voneinander abweichen können.

7. Überwachungsrechner (UR) nach einem der vorhergehenden Ansprüche, **dadurch gekennzeichnet, dass** die Fehlerzählung asymmetrisch aufgebaut ist.

8. Überwachungsrechner (UR) nach einem der vorhergehenden Ansprüche, **dadurch gekennzeichnet, dass** die Ausgänge (URA) des Überwachungsrechners (UR) komplementär ausgeführt sind.

9. Überwachungsrechner (UR) nach einem der vorhergehenden Ansprüche, **dadurch gekennzeichnet, dass** die Antwortzeit frei konfigurierbar im Bereich zwischen 1 ms und 255 ms liegt.

10. Überwachungsrechner (UR) nach einem der vorhergehenden Ansprüche, **dadurch gekennzeichnet, dass** das Antwortzeitfenster im Bereich zwischen 1 ms und 255 ms liegt, wobei das Verhältnis von Antwortzeit und Antwortzeitfenster frei skalierbar ist.

11. Überwachungsrechner (UR) nach einem der vorhergehenden Ansprüche, **dadurch gekennzeichnet, dass** ein Abschaltpfadtest (SOPC) als eigener Zustand in der State Machine (SM1, SM2) ausgeführt ist.

12. Überwachungsrechner (UR) nach einem der vorhergehenden Ansprüche, **dadurch gekennzeichnet, dass** ein kontinuierlicher CRC-Test (Checksum-Test) im Hintergrund durchgeführt wird.

13. Überwachungsrechner (UR) nach einem der vorhergehenden Ansprüche, **dadurch gekennzeichnet, dass** eine Zufallszahlengenerierung zur Auswahl der Fragen im Frage-Antwort-Verfahren mittels eines Linear Feedback Shift Registers erfolgt.

14. Prozessor mit einem Funktionsrechner (FR) und einen Überwachungsrechner (UR) nach Anspruch 1, wobei auf dem Prozessor ein Rechenelement zur Steuerung wenigstens einer Funktion eines Kraftfahrzeugs in Abhängigkeit wenigstens einer Eingangsgröße ausgeführt wird, und der Überwachungsrechner (UR) mit dem Funktionsrechner (FR) mittels eines Frage-Antwort-Verfahrens über eine Schnittstelle kommuniziert, **dadurch gekennzeichnet, dass** der Funktionsrechner (FR) und der Überwachungsrechner (UR) physikalisch unabhängig voneinander sind und der Überwachungsrechner (UR) zwei voneinander unabhängige Monitoring Units (MU1, MU2) umfasst, wobei durch jede Monitorng Unit (MU1, MU2) mittels eines entsprechenden Monitioring Elements (EM1, EM2) im Funktionsrechner (FR) jeweils eine Kontrolle (K1, K2) zur Überwachung der ordnungsgemäßen Abarbeitung der Programmbefehle des Funktionsrechners (FR) ausgeführt wird.

15. Verfahren zur Überwachung eines Prozessors nach Anspruch 14, **dadurch gekennzeichnet, dass** der Funktionsrechner (FR) und der Überwachungsrechner (UR) physikalisch unabhängig voneinander sind und der Überwachungsrechner (UR) zwei voneinander unabhängige Monitoring Units (MU1, MU2) umfasst, wobei durch jede Monitorng Unit (MU1, MU2) mittels eines entsprechenden Monitioring Elements (EM1, EM2) im Funktionsrechner (FR) jeweils eine Kontrolle (K1, K2) zur Überwachung der ordnungsgemäßen Abarbeitung der Programmbefehle des Funktionsrechners (FR) ausgeführt wird.

## Claims

1. Monitoring computer (UR) for monitoring a processor on which a computing element is executed, the processor substantially comprising a function computer (FR) in addition to the monitoring computer (UR), and the computing element comprising a functional module (E1), a safety module (E2) and a monitoring module (E3), all modules (E1, E2 and E3) being implemented on the function computer (FR), and the monitoring computer (UR) communicating with at least the monitoring module (E3) on the function computer (FR) by means of a question-and-answer method via an interface,
**characterized in that**
the function computer (FR) and the monitoring computer (UR) are physically independent of one another, and the monitoring computer (UR) comprises two monitoring units (MU1, MU2) which are independent of one another, each monitoring unit (MU1, MU2) in the function computer (FR) using a corresponding monitoring element (ME1, ME2) to respectively carry out a check (K1, K2) for monitoring the proper execution of the program instructions of the function computer (FR).

2. Monitoring computer (UR) according to Claim 1, **characterized in that** the first monitoring unit (MU1) is used to carry out a first check (K1) in the safety module (E2), and the second monitoring unit (MU2) is used to carry out a second check (K2) in the monitoring module (E3), in test paths (TP1, TP2) in each case.

3. Monitoring computer (UR) according to Claim 1 or 2, **characterized in that** the first monitoring unit (MU1) is used to carry out a memory test and a program flow check as the first check (K1) in the safety module (E2).

4. Monitoring computer (UR) according to Claim 1 or 2, **characterized in that** the second monitoring unit (MU2) is used to carry out an instruction set test and an AD converter test as the second check (K2) in the monitoring module (E3).

5. Monitoring computer (UR) according to one of the preceding claims, **characterized in that** an error counter is operated when an error occurs in the check (K1, K2), and a system reaction is triggered by the monitoring computer (UR) independently of the function computer (FR) when freely programmable error reaction thresholds (thresh, reset thresh) are exceeded.

6. Monitoring computer (UR) according to one of the preceding claims, **characterized in that,** in addition to other parameters, a response time, a response time window, a switch-off threshold (thresh) and a reset threshold (reset thresh) are respectively stipulated using a state machine (SM1, SM2) when initializing the processor in the computing element during configuration of the corresponding monitoring unit (MU1, MU2), the parameters being able to differ from one another depending on the monitoring unit (MU1, MU2).

7. Monitoring computer (UR) according to one of the preceding claims, **characterized in that** the error counting has an asymmetrical structure.

8. Monitoring computer (UR) according to one of the preceding claims, **characterized in that** the outputs (URA) of the monitoring computer (UR) are complementary.

9. Monitoring computer (UR) according to one of the preceding claims, **characterized in that** the response time is freely configurable in the range between 1 ms and 255 ms.

10. Monitoring computer (UR) according to one of the preceding claims, **characterized in that** the response time window is in the range between 1 ms and 255 ms, the ratio of response time to response time window being freely scalable.

11. Monitoring computer (UR) according to one of the preceding claims, **characterized in that** a switch-off path test (SOPC) is designed as a separate state in the state machine (SM1, SM2).

12. Monitoring computer (UR) according to one of the preceding claims, **characterized in that** a continuous CRC test (checksum test) is carried out in the background.

13. Monitoring computer (UR) according to one of the preceding claims, **characterized in that** random number generation for selecting the questions in the question-and-answer method is carried out using a linear feedback shift register.

14. Processor having a function computer (FR) and a monitoring computer (UR) according to Claim 1, a computing element for controlling at least one function of a motor vehicle on the basis of at least one input variable being executed on the processor, and the monitoring computer (UR) communicating with the function computer (FR) by means of a question-and-answer method via an interface, **characterized in that** the function computer (FR) and the monitoring computer (UR) are physically independent of one another, and the monitoring computer (UR) comprises two monitoring units (MU1, MU2) which are independent of one another, each monitoring unit (MU1, MU2) using a corresponding monitoring element (ME1, ME2) in the function computer (FR) to respectively carry out a check (K1, K2) for monitoring the proper execution of the program instructions of the function computer (FR).

15. Method for monitoring a processor according to Claim 14, **characterized in that** the function computer (FR) and the monitoring computer (UR) are physically independent of one another, and the monitoring computer (UR) comprises two monitoring units (MU1, MU2) which are independent of one another, each monitoring unit (MU1, MU2) using a corresponding monitoring element (ME1, ME2) in the function computer (FR) to respectively carry out a check (K1, K2) for monitoring the proper execution of the program instructions of the function computer (FR).

## Revendications

1. Calculateur de surveillance (UR) pour la surveillance d'un processeur, sur lequel un élément de calcul est réalisé, le processeur comprenant, en plus du calculateur de surveillance (UR), essentiellement un calculateur de fonction (FR) et l'élément de calcul comprenant un module de fonction (E1), un module de sécurité (E2) et un module de surveillance (E3), tous les modules (E1, E2 et E3) étant réalisés sur le calculateur de fonction (FR) et le calculateur de surveillance (UR) communiquant au moins avec le module de surveillance (E3) sur le calculateur de fonction (FR) à l'aide d'un procédé question-réponse par l'intermédiaire d'une interface,
**caractérisé en ce que**
le calculateur de fonction (FR) et le calculateur de surveillance (UR) sont physiquement indépendants l'un de l'autre et le calculateur de surveillance (UR) comprend deux Monitoring Units (MU1, MU2) indépendantes l'une de l'autre, chaque unité de contrôle (MU1, MU2) permettant de réaliser, dans le calculateur de fonction (FR), à l'aide d'un élément de contrôle (ME1, ME2) correspondant, un contrôle (K1, K2) pour la surveillance du traitement correct des instructions du programme du calculateur de fonction (FR).

2. Calculateur de surveillance (UR) selon la revendication 1, **caractérisé en ce que**, à l'aide de la première unité de contrôle (MU1), un premier contrôle (K1) est effectué dans le module de sécurité (E2) et, à l'aide de la deuxième unité de contrôle (MU2), un deuxième contrôle (K2) étant effectué dans le module de surveillance (E3), respectivement dans les trajets de test (TP1, TP2).

3. Calculateur de surveillance (UR) selon la revendication 1 ou 2, **caractérisé en ce que** le premier contrôle (K1) effectué à l'aide de la première unité de de contrôle (MU1) dans le module de sécurité (E2) est un test de mémoire et un contrôle de déroulement de programme.

4. Calculateur de surveillance (UR) selon la revendication 1 ou 2, **caractérisé en ce que** le deuxième contrôle (K2) effectué à l'aide de la deuxième unité de contrôle (MU2) dans le module de surveillance (E3) est un test de jeu d'instructions et un test de convertisseur analogique-numérique.

5. Calculateur de surveillance (UR) selon l'une des revendications précédentes, **caractérisé en ce que**, lors de la survenue d'une erreur dans le contrôle (K1, K2), un compteur d'erreurs est commandé et lors du dépassement de seuils de réaction aux erreurs librement programmables (thresh, reset thresh) une réaction du système est déclenchée indépendamment du calculateur de fonction (FR) par le calculateur de surveillance (UR).

6. Calculateur de surveillance (UR) selon l'une des revendications précédentes, **caractérisé en ce que**, à l'aide d'une machine à états (SM1, SM2), lors de l'initialisation du processeur dans l'élément de calcul, lors de la configuration de l'unité de contrôle (MU1, MU2) correspondante, en plus d'autres paramètres, un temps de réponse, une fourchette de temps de réponse, un seuil d'arrêt (thresh) et un seuil de reset (reset thresh) sont déterminés, ces paramètres pouvant varier en fonction de l'unité de contrôle (MU1, MU2).

7. Calculateur de surveillance (UR) selon l'une des revendications précédentes, **caractérisé en ce que** le comptage d'erreurs est construit de manière asymétrique.

8. Calculateur de surveillance (UR) selon l'une des revendications précédentes, **caractérisé en ce que** les sorties (URA) du calculateur de surveillance (UR) sont réalisés de manière complémentaire.

9. Calculateur de surveillance (UR) selon l'une des revendications précédentes, **caractérisé en ce que** le temps de réponse est librement configurable entre 1 ms et 255 ms.

10. Calculateur de surveillance (UR) selon l'une des revendications précédentes, **caractérisé en ce que** la fourchette de temps de réponse est entre 1 ms et 255 ms, le rapport entre le temps de réponse et la fourchette de temps de réponse étant librement échelonnable.

11. Calculateur de surveillance (UR) selon l'une des revendications précédentes, **caractérisé en ce qu'**un test de trajet d'arrêt (SOPC) est effectué en tant qu'état propre dans la machine à états (Sm1, SM2).

12. Calculateur de surveillance (UR) selon l'une des revendications précédentes, **caractérisé en ce qu'**un test CRC (test Checksum) est effectué en arrière-plan.

13. Calculateur de surveillance (UR) selon l'une des revendications précédentes, **caractérisé en ce qu'**une génération de nombres aléatoires a lieu pour la sélection des questions dans le procédé question-réponse à l'aide d'un registre à décalage à rebouclage linéaire (LFSR).

14. Processeur avec un calculateur de fonction (FR) et un calculateur de surveillance (UR) selon la revendication 1, un élément de calcul étant réalisé sur le processeur, pour la commande d'au moins une fonction d'un véhicule à moteur en fonction d'au moins une grandeur d'entrée et le calculateur de surveillance (UR) communiquant avec le calculateur de fonction (FR) à l'aide d'un procédé question-réponse, **caractérisé en ce que** le calculateur de fonction (FR) et le calculateur de surveillance (UR) sont physiquement indépendants l'un de l'autre et **en ce que** le calculateur de surveillance (UR) comprend deux unités de contrôle (MU1, MU2) indépendantes l'une de l'autre, chaque unité de contrôle (MU1, MU2) permettant d'effectuer, à l'aide d'un élément de contrôle (EM1, EM2) dans le calculateur de fonction (FR), un contrôle (K1, K2) pour la surveillance du traitement correct des instructions du programme du calculateur de fonction (FR).

15. Procédé de surveillance d'un processeur selon la revendication 14, **caractérisé en ce que** le calculateur de fonction (FR) et le calculateur de surveillance (UR) sont physiquement indépendants l'un de l'autre et **en ce que** le calculateur de surveillance (UR) comprend deux unités de contrôle (MU1, MU2) indépendantes l'une de l'autre, chaque Monitoring Unit (EM1, EM2) permettant d'effectuer, à l'aide d'un élément de contrôle (EM1, EM2) correspondant dans le calculateur de fonction (FR), un contrôle (K1, K2) pour la surveillance du traitement correct des instructions du programme du calculateur de fonction (FR).
